## Europäisches Patentamt

(19) **European Patent Office**

**Office européen des brevets**

(11) Numéro de publication: **0 063 967**

**B1**

(12) # FASCICULE DE BREVET EUROPÉEN

(45) Date de publication du fascicule du brevet:
26.11.86

(51) Int. Cl.⁴: **B 23 Q 11/00**

(21) Numéro de dépôt: **82400504.5**

(22) Date de dépôt: **19.03.82**

(54) Dispositif d'équilibrage de chariot mobile de machines.

(30) Priorité: **17.04.81 FR 8107794**

(43) Date de publication de la demande:
**03.11.82 Bulletin 82/44**

(45) Mention de la délivrance du brevet:
**26.11.86 Bulletin 86/48**

(84) Etats contractants désignés:
**AT BE CH DE GB IT LI LU NL SE**

(56) Documents cité:
**DE-A-2 328 404**
**FR-A-2 153 990**
**GB-A-2 033 796**
**US-A-1 669 915**
**US-A-3 546 979**

(73) Titulaire: **CENTRE D'ETUDES DU FRAISAGE (C.E.F.), 80 rue des Meuniers, F-92220 Bagneux (FR)**

(72) Inventeur: **Sachot, Michel, 55, rue Curie, F-91400 Saclay (FR)**

(74) Mandataire: **Loyer, Yves, CABINET PIERRE LOYER 18, rue de Mogador, F-75009 Paris (FR)**

## Description

Dans de nombreuses machines, notamment les machines outils, il existe un ou plusieurs organes coulissants, susceptibles de se déplacer avec un guidage par glissière, sur un support qui peut lui-même être coulissant comme c'est le cas, par exemple pour un chariot coulissant horizontalement sur une console elle-même coulissant verticalement.

Il est connu de diminuer ou d'annuler l'action de la pesanteur sur le dispositif de mise en position d'un tel organe par contrepoids, vérin, ressort, etc.

Les actions des forces exercées par ces moyens sur l'ensemble à équilibrer admettent une résultante dont le point d'application est généralement fixe.

Dans le cas de machines comportant un chariot supportant un deuxième chariot, mobile sur le premier selon une direction quelconque autre que verticale, le centre de gravité de l'ensemble se déplace; il en résulte une distance variable entre le point d'application de la résultante des forces d'équilibrage et le centre de gravité de l'ensemble des chariots qui crée un couple de forces dont le moment provoque la déformation des guidages, le déplacement incontrôlé des chariots dans le jeu de fonctionnement de leurs glissières ainsi que des efforts antagonistes dans le dispositif de mise en position. Différentes solutions ont déjà été proposées pour remédier à ce problème dont l'acuité est accrue par le développement des machines à commande numérique. En effet, sur de telles machines, la mise en place des organes est automatique et il faut donc éviter ou corriger automatiquement les déformations, déplacements incontrôlés, ou jeux, qui, auparavant, pouvaient être corrigés par un réglage manuel.

Selon l'une de ces solutions, décrite au brevet français n° 72.32413 (n° de publication 2.153.990), on emploie un contrepoids dont la position du centre de gravité peut être modifiée par raccourcissement ou allongement de l'une de ses chaînes de suspension, lesquelles supportent ce contrepoids en des points distincts et distants.

Cependant, les modifications ainsi obtenues sont de faible amplitude et ne peuvent être valablement utilisées que si l'organe mobile selon une direction horizontale est d'un poids restreint, de telle sorte que le déplacement du centre de gravité soit peu important.

La présente invention a pour objet un ensemble formé par un premier chariot de machine supportant un second chariot qui est mobile sur le premier selon une direction autre que verticale, comprenant un dispositif d'équilibrage formé par un contrepoids relié au premier chariot par au moins deux chaînes qui sont supportées par des poulies de renvoi, la longueur relative des brins de chaîne reliant les poulies audit premier chariot étant variable en fonction du déplacement du second chariot, caractérisé en ce que les poulies sont entraînées par les chaînes et sont solidaires d'un arbre de torsion.

Par ce moyen, à l'effort appliqué par le contrepoids sur chacune des attaches reliant les chaînes au premier chariot vient s'ajouter un moment de torsion faisant varier l'intensité relative de ces efforts selon la fonction adoptée et par conséquent de nature à compenser le couple résultat du déplacement du centre de gravité du second chariot.

L'invention vise également les dispositions préférées ci-après:

a) La variation de longueur relative des brins de chaîne est fonction linéaire du déplacement du second chariot.

b) La variation de longueur relative des brins de chaîne reliant les poulies au premier chariot est obtenue par au moins un organe mobile dont le mouvement est commandé par les déplacements du second chariot, ledit mouvement faisant varier la distance au premier chariot de l'extrémité de la chaîne correspondante.

c) Ledit organe est une rampe solidaire du second chariot et sur laquelle roule un galet lié à l'extrémité d'une chaîne, l'effort appliqué par cette chaîne étant transmis au premier chariot par l'intermédiaire du second.

d) Ledit organe est une pièce mécanique mobile portée par le premier chariot dont les déplacements sont commandés par l'organe commandant les déplacements du second chariot et sur laquelle est fixée l'extrémité d'une chaîne.

e) La variation de longueur relative des brins de chaîne est obtenue par au moins un écrou, porté par le premier chariot, mis en mouvement par les déplacements du second chariot ou par l'organe commandant ces déplacements et agissant sur une vis portée par l'extrémité d'une chaîne.

f) Le contrepoids est porté par les chaînes par l'intermédiaire d'un palonnier relié avec articulation en un seul point du contrepoids.

Cette disposition a pour but que les variations de longueur de chaîne n'entraînent pas de déplacements latéraux du contrepoids.

g) L'équipage portant les poulies et l'arbre de torsion est dépourvu de liaison mécanique rigide avec les chariots et leur bâti support.

h) L'équipage portant les poulies et l'arbre de torsion repose sur des pièces d'appui telles que des colonnes transmettant les efforts sur le socle ou la fondation, sur lequel est fixé le bâti de la machine sans liaison mécanique avec les chariots et le bâti.

i) La variation de longueur relative des brins de chaîne est établie de telle sorte que la résultante des forces d'équilibrage reste en permanence contenue dans un plan vertical contenant le centre de gravité de l'ensemble des chariots et perpendiculaire au plan de guidage du second chariot.

L'invention est décrite plus amplement avec référence au dessin annexé sur lequel:

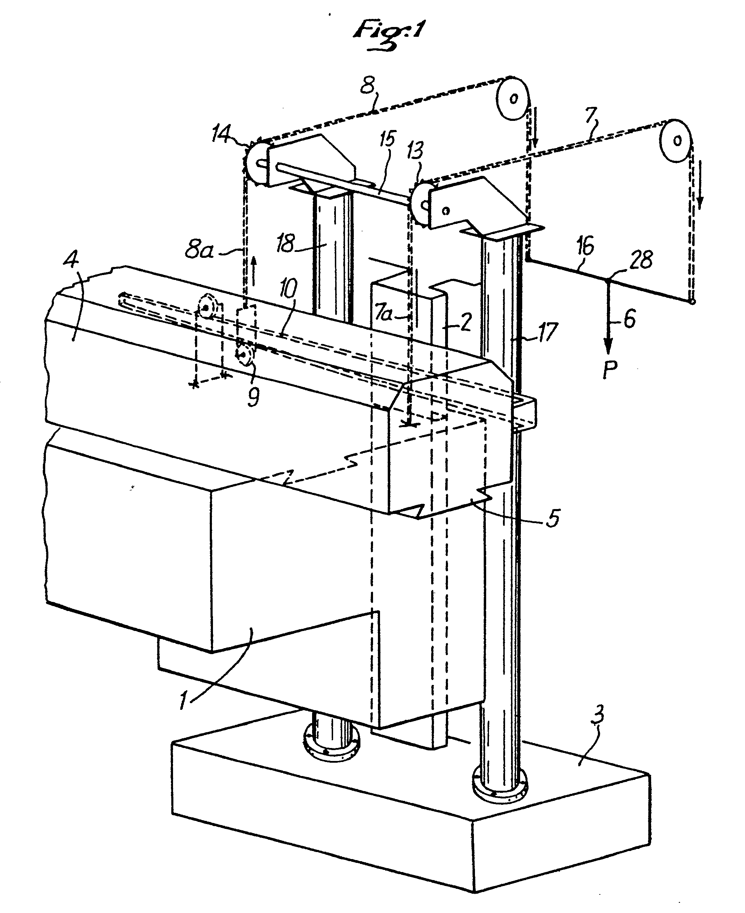

La figure 1 est une vue schématique perspective montrant le principe de l'invention:

La figure 2 est une vue de côté d'un exemple de réalisation:

La figure 3 est une vue de face de la machine de la figure 2;

La figure 4 est une vue de dessus de la machine de la figure 2;

La figure 5 est une vue schématique latérale partielle d'une variante de réalisation de la figure 2;

La figure 6 est une vue schématique partielle de dessus de la même variante.

Les exemples représentés se rapportent au cas d'une machine outil comportant une console 1 (premier chariot) coulissant verticalement sur les glissières 2 d'un bâti 3 et supportent un bélier ou analogue 4 (second chariot) coulissant horizontalement sur la console 1 par la glissière 5.

Mais l'invention n'est pas limitée à cet exemple, ni au cas de coulissement horizontal du second chariot.

Conformément à l'invention, la console 1 est reliée à un contrepoids 6 (poids P) par deux chaînes ou ensembles de chaînes 7 et 8.

Dans l'exemple représenté, l'une de ces chaînes, en l'espéce la chaîne 7 est reliée directement à la console 1 par l'attache 24, de préférence réglable en hauteur, la chaîne 8 se terminant par un galet 9 qui roule sur une rampe 10 liée au bélier 4. La transmission de l'effort exercé par la chaîne 8 à la console 1 se fait soit directement soit par l'intermédiaire du ou des galets 11 roulant sur la partie supérieure de la rampe 10 et relié en 12 à la console 1.

La transmission des efforts exercés par le contrepoids 6 sur la console 1 par les chaînes 7 et 8 est effectuée par les poulies 13 et 14 qui sont entraînées par les chaînes 7 et 8 (les poulies 22, 23 étant simplement des poulies de renvoi). Par exemple les chaînes 7 et 8 seront des chaînes à galets et les poulies 13 et 14 auront la forme de pignons dentés -toute autre disposition à la portée de l'homme de l'art pour assurer l'entraînement des poulies 13 et 14 par les chaînes 7 et 8 pourra être adoptée.

Les poulies 13 et 14 sont solidaires de l'arbre de torsion 15.

La rampe 10 est dessinée de façon à ce que les déplacements du bélier 4 provoquent une variation de longueur du brin de la chaîne 8a qui sépare la poulie 14 de la console 1 par rapport à la longueur du brin de la chaîne 7a qui sépare la poulie 13 de la console 1.

Cette variation relative provoque une torsion de l'arbre 15 qui se traduit par un moment M donnant sur le diamètre extérieur des poulies 13 et 14 un effort tangentiel T. Ainsi, si P est le poids du contrepoids 6, les efforts appliqués sur la console 1 par les brins de chaîne 7 et 8 auront pour valeurs respectives:

$$\frac{P}{2} + T \quad et \quad \frac{P}{2} - T$$

Le déplacement du bélier 4 provoque un déplacement du centre de gravité de l'ensemble formé par la console 1 et le bélier 4, qui se traduit en un couple exercé sur la glissière 2, et la rampe 10 sera de préférence conformée de façon à ce que la différence de tension sur les chaînes donne un couple égal et de sens inverse; en d'autres termes, la rampe 10 sera établie pour que la résultante des efforts exercés par les brins 7a et 8a reste constamment dans le plan vertical contenant le centre de gravité de l'ensemble bélier + console, et perpendiculaire au plan de guidage du bélier 4.

Conformément à une disposition de l'invention, le contrepoids 6 est suspendu aux chaînes 7 et 8 par le palonnier 16 relié au contrepoids 6 par l'articulation 28; il en résulte que les variations de longueur relative des chaînes n'ont pas d'effet sur la position latérale du centre de gravité du contrepoids 6.

Dans l'exemple représenté les pièces d'appui 17, 18 sont des colonnes qui traversent le bâti 3 de la machine sans liaison mécanique, à travers de simples guidages 25, 26 et renvoient les efforts sur le socle 19 de la machine ou sur la fondation.

En variante de la rampe 10, on peut utiliser d'autres moyens de variations de la longueur relative des brins des chaînes 7 et 8 séparant les poulies 13 et 14 de la console 1.

Par exemple, l'extrémité de la chaîne 8 peut être reliée à la console 1 par l'intermédiaire d'une crémaillère d'un bras tournant ou d'une came dont la rotation est commandée par l'organe de commande des déplacements du bélier 4.

Ou encore, cette extrémité peut porter une vis coagissant avec un écrou entraîné en rotation par ledit organe de commande des déplacements du bélier 4, ou directement par ce dernier, au cours de ses déplacements.

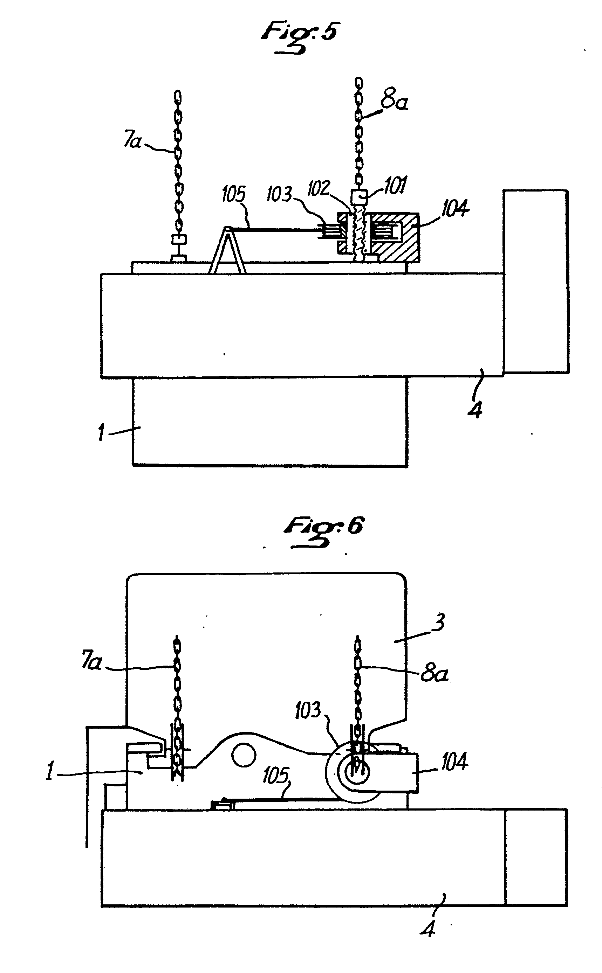

Cette dernière variante est représentée schématiquement sur les figures 5 et 6.

La chaîne 8 porte à son extrémité une vis 101 s'engageant dans un écrou 102 (par exemple un écrou à billes) solidaires d'une poulie 103. L'écrou et la poulie sont emprisonnés dans une chape 104 liée à la console. Un câble ou un ruban 105 s'enroule d'un côté sur la poulie 103 et est attaché de l'autre au support 106 lié au bélier 4.

Lorsque le bélier 4 se déplace, il entraîne le câble 105 qui fait tourner la poulie 103 donc l'écrou 102, ce qui provoque le mouvement axial de la vis 101, et une variation de longueur de la chaîne 8. L'ensemble vis-écrou à billes étant parfaitement réversible, la traction sur la chaîne 8 se traduit par un couple sur la poulie 102, ce qui assure une tension permanente sur le ruban ou câble 105.

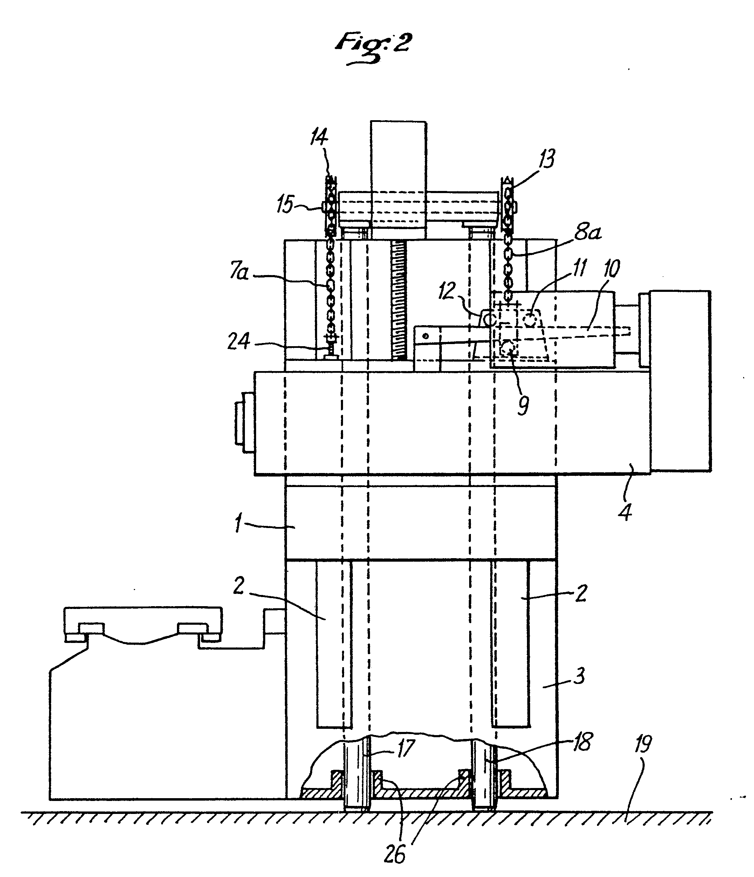

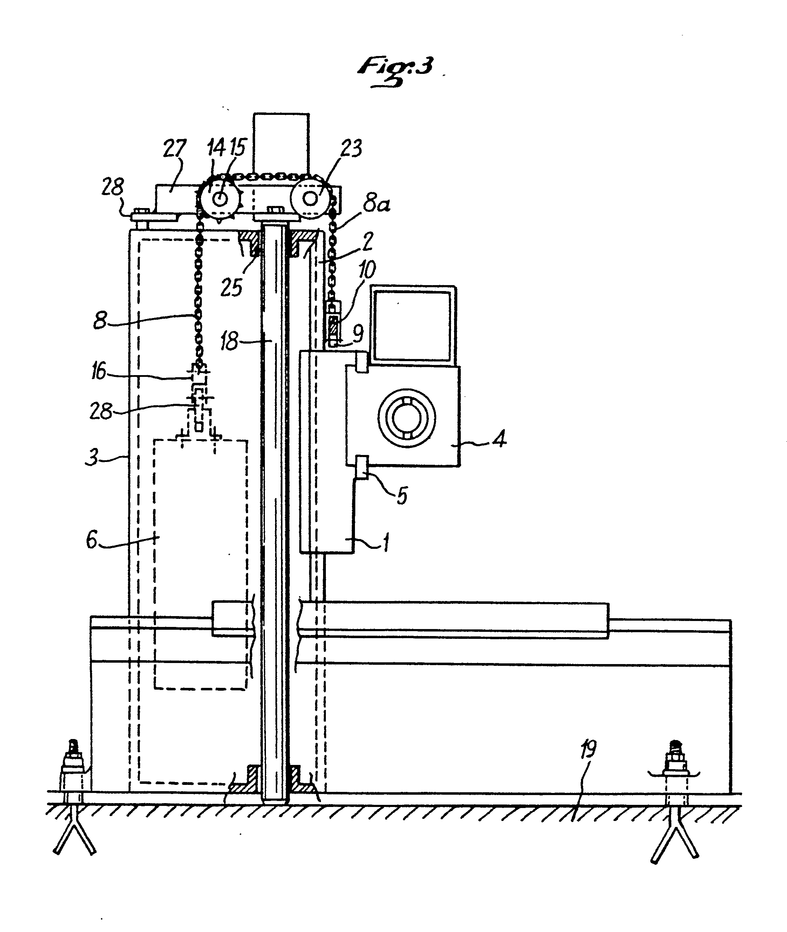

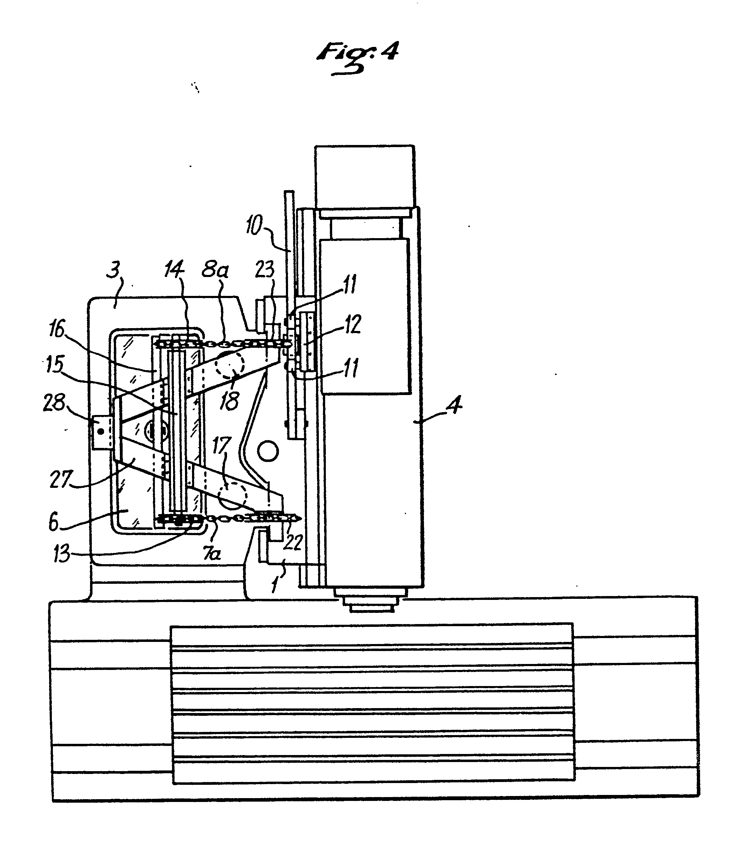

Dans l'exemple des figures 2, 3 et 4 les colonnes 17 et 18 supportent un châssis 27 portant les paliers des poulies 13 et 14 l'arbre de torsion 15 et les poulies de renvoi 22, 23. Ce châssis 27 est relié au bâti 3 par un point d'attache 28 qui n'est pas une attache rigide et vient seulement compléter les guidages 25 et 26.

**Revendications**

1. Ensemble formé par un premier chariot (1) de machine supportant un second chariot (4) qui est mobile sur le premier selon une direction autre que verticale, comprenant un dispositif d'équilibrage formé par un contrepoids (6) relié au premier chariot (1) par au moins deux chaînes (7, 8) qui sont supportées par des poulies de renvoi (13, 14), la longueur relative des brins de chaîne (7a, 8a) reliant les poulies (13, 14) audit premier chariot (1) étant variable en fonction du déplacement du second chariot (4), caractérisé en ce que les poulies (13, 14) sont entraînées par les chaînes (7, 8) et sont solidaires d'un arbre de torsion (15).

2. Ensemble selon la revendication 1, caractérisé en ce que la variation de longueur relative des brins de chaîne (7a, 8a) est fonction linéaire du déplacement du second chariot.

3. Ensemble selon l'une quelconque des revendications 1 et 2, caractérisé en ce que la variation de longueur relative des brins de chaînes (7a, 8a) reliant les poulies au premier chariot (1) est obtenue par au moins un organe mobile (10) dont le mouvement est commandé par les déplacements du second chariot (4), ledit mouvement faisant varier la distance au premier chariot (1) de l'extrémité de la chaîne (8) correspondante.

4. Ensemble selon la revendication 3, caractérisé en ce que ledit organe est une rampe (10) solidaire du second chariot (4) et sur laquelle roule un galet (9) lié à l'extrémité d'une chaîne (8), l'effort appliqué par cette chaîne étant transmis au premier chariot par l'intermédiaire du second.

5. Ensemble selon la des revendication 3, caractérisé en ce que ledit organe est une pièce mécanique mobile portée par le premier chariot (1), dont les déplacements sont commandés par l'organe commandant les déplacements du second chariot (4) et sur laquelle est fixée l'extrémité d'une chaîne.

6. Ensemble selon la revendication 5, caractérisé en ce que la variation de longueur relative des brins de chaîne (7 et 8) est obtenue par au moins un écrou porté par le premier chariot, mis en mouvement par les déplacements du second chariot ou par l'organe de commande de ces déplacements et agissant sur une vis portée par l'extrémité d'une chaîne.

7. Ensemble selon l'une quelconque des revendications précédentes, caractérisé en ce que le contrepoids (6) est porté par les chaînes (7 et 8) par l'intermédiaire d'un palonnier (16) relié avec articulation en un seul point du contrepoids (6).

8. Ensemble selon l'une quelconque des revendications précédentes, caractérisé en ce que l'équipage (27) portant les poulies (13, 14) et l'arbre de torsion (15) est dépourvu de liaison mécanique rigide avec les chariots (1 et 4) et leur bâti support (3).

9. Ensemble selon l'une quelconque des revendications précédentes, caractérisé en ce que l'équipage (27) portant les poulies (13, 14) et l'arbre de torsion (15) repose sur des pièces d'appui (17, 18) telles que des colonnes transmettant les efforts sur le socle ou la fondation sur lequel est fixé le bâti (3) de la machine sans liaison mécanique avec les chariots et le bâti.

10. Ensemble selon l'une quelconque des revendications précédentes, caractérisé en ce que la variation de longueur relative des brins de chaîne (7, 8) est établie de telle sorte que la résultante des forces d'équilibrage reste en permanence contenue dans un plan vertical contenant le centre de gravité de l'ensemble des chariots et perpendiculaire au plan de guidage du second chariot (4).

**Patentansprüche**

1. Vorrichtung aus einem Maschinenschlitten (1) mit einem darauf in irgendeiner Richtung, jedoch nicht senkrecht laufenden zweiten Schlitten (4) mit einer aus einem Gegengewicht (6) bestehenden Ausgleichsvorrichtung, die mittels mindestens zwei über Umlenkrollen (13, 14) laufende Ketten (7, 8) mit dem ersten Schlitten (1) verbunden ist, wobei die relative Länge der die Umlenkrollen (13, 14) mit dem ersten Schlitten (1) verbindenden Kettenstränge (7a, 8a) je nach Verschiebung des zweiten Schlittens (4) variiert, dadurch gekennzeichnet, daß die Umlenkrollen (13, 14) von den Ketten (7, 8) angetrieben werden und mit einer Verdrehwelle (15) kraftschlüssig verbunden sind.

2. Vorrichtung nach Anspruch 1, dadurch gekennzeichnet, daß die Variation der relativen Kettenstranglänge (7a, 8a) zwischen den Umlenkrollen und dem ersten Schlitten (1) eine lineare Funktion der Verschiebung des zweiten Schlittens ist.

3. Vorrichtung nach Anspruch 1 - 2, dadurch gekennzeichnet, daß die Variation der relativen Kettenstranglänge (7a, 8a) zwischen den Umlenkrollen und dem ersten Schlitten (1) durch zumindest ein bewegliches Organ (10) erfolgt, dessen Bewegung durch die Verschiebung des zweiten Schlittens (4) gesteuert wird und welche den Abstand des entsprechenden Kettenendes (8) zum Schlitten (1) variiert.

4. Vorrichtung nach Anspruch 3, dadurch gekennzeichnet, daß dieses Organ eine mit dem zweiten Schlitten (4) fest verbundene Laufschiene (10) darstellt, auf der eine mit dem Kettenende (8) verbundene Rolle (9) läuft, wobei die von dieser Kette ausgeübte Kraft über den zweiten Schlitten auf den ersten übertragen wird.

5. Vorrichtung nach Anspruch 3, dadurch gekennzeichnet, daß dieses Organ ein beweglicher, auf dem ersten Schlitten (1) befestigter mechanischer Bauteil ist, dessen Bewegung vom Steuerorgan zur Verschiebung des zweiten Schlittens (4) gesteuert wird und an dem das Ende einer Kette befestigt ist.

6. Vorrichtung nach Anspruch 5, dadurch gekennzeichnet, daß die Variation der relativen Kettenstranglänge (7 und 8) durch mindestens eine, auf dem ersten Schlitten (1) befestigten und durch die Verschiebung des zweiten Schlittens (4) bzw. durch das Steuerorgan für diese Verschiebung in Bewegung versetzte Mutter erfolgt, die in eine am Ende einer Kette befestigte Schraube eingreift.

7. Vorrichtung nach Anspruch 1 - 6, dadurch gekennzeichnet, daß das Gegengewicht (6) von den Ketten (7, 8) über einen Querbalken (16) gehalten wird, welcher mit einem Gelenk an einem Punkt mit dem Gegengewicht (6) verbunden ist.

8. Vorrichtung nach Anspruch 1 - 7, dadurch gekennzeichnet, daß die Halterung (27) für die Umlenkrollen (13, 14) und die Verdrehwelle (15) keine feste mechanische Verbindung mit den beiden Schlitten (1 und 4) und ihrem Untergestell (3) besitzt.

9. Vorrichtung nach Anspruch 1 - 6, dadurch gekennzeichnet, daß diese Halterungen (27) für die Umlenkrollen (13, 14) und die Verdrehwelle (15) auf Lagerstützen (17, 18) wie Säulen aufliegen, die die Kräfte in den Sockel oder das Maschinenfundament, auf dem das Gestell (3) befestigt ist, ohne mechanische Verbindung mit den Schlitten und dem Gestell einleiten.

10. Vorrichtung nach Anspruch 1 - 9, dadurch gekennzeichnet, daß die Variation der relativen Kettenstranglänge (7, 8) so festgelegt wird, daß die Resultante der Ausgleichskräfte stets in einer vertikalen, den Schwerpunkt beider Schlitten beinhaltenden Ebene bleibt und senkrecht zur Führungsebene des zweiten Schlittens (4) wirkt.

**Claims**

1. An assembly formed of a first machine carriage (1) supporting a second carriage (4) which is movable on the first one along a direction other than vertical, comprising a balancing device formed of a counterweight (6) connected to the first carriage (1) by at least two chains (7, 8) which are supported by pulleys (13, 14), the relative length of the chain strands (7a, 8a) connecting the pulleys (13, 14) to said first carriage (1) being variable as a function of the displacement of the second carriage (4) characterized in that the pulleys (13, 14) are driven by the chains (7, 8) and are integral with a torsion shaft (15).

2. An assembly according to claim 1, characterized in that the variation of the relative length of the chain strands (7a, 8a) is a linear function of the displacement of the second carriage.

3. An assembly according to any one of claims 1 and 2, characterized in that the variation of the relative length of the chain strands (7a, 8a) connecting the pulleys to the first carriage (1) is obtained by means of at least one mobile member (10), the motion of which is driven by the displacements of the second carriage (4), said motion modifying the distance from the first carriage (1) to the end of the corresponding chain (8).

4. An assembly according to claim 3, characterized in that the said member is a ramp (10) integral with the second carriage (4) and upon which is rolling a roller (9) linked to the end of one chain (8), the stress applied by this chain being transmitted to the first carriage through the intermediary of the second one.

5. An assembly according to claim 3, characterized in that the said member is a mobile mechanical part carried by the first carriage (1), the displacements of which are driven by the member driving the displacements of the second carriage (4) and to which is fixed the end of one chain.

6. An assembly according to claim 5, characterized in that the variation of the relative length of the chain strands (7 and 8) is obtained by means of at least one nut carried by the first carriage, driven by the displacements of the second carriage or by the driving member controlling said displacements, said nut cooperating with a screw carried by the end of the chain.

7. An assembly according to any one of the above claims, characterized in that the counterweight (6) is carried by the chains (7 and 8) through the intermediary of a compensation bar (16) pivotally linked to a single point of the counterweight (6).

8. An assembly according to any one of the above claims, characterized in that the carrier gear (27) supporting the pulleys (13, 14) and the torsion shaft (15) is free of any rigid mechanical linkage with the carriages (1 and 4) and their supporting frame (3).

9. An assembly according to any one of the above claims, characterized in that the carrier gear (27) supporting the pulleys (13, 14) and the torsion shaft (15) rests upon supporting members (17, 18) such as pillars transmitting the stresses to the bed-plate or the foundation to which is fixed the frame (3) of the machine without any mechanical linkage with the carriages and the frame.

10. An assembly according to any one of the above claims, characterized in that the variation of the relative length of the chain strands (7, 8) is established so that the resultant of the balancing forces will permanently remain contained within a vertical plane containing the centre of gravity of the assembly of the carriages and perpendicular to the guiding plane of the second carriage (4).

Fig:1

# Fig. 2

Fig:3

Fig. 4

Fig. 5

Fig. 6